# EUROPEAN PATENT SPECIFICATION

(11) **EP 1 010 021 B1**
(45) Date of publication and mention of the grant of the patent: **13.10.2004**
(21) Application number: 98939106.5
(22) Date of filing: 29.07.1998
(51) Int. Cl.: G01V 5/00, G01T 1/00

(54) **SIDE-BY-SIDE DETECTOR ARRAY FOR DUAL ENERGY X-RAY IMAGING SYSTEM**
NEBENEINANDER-DETECTORANORDNUNG FÜR RÖNTGEN -BILDERZEUGUNGSSYSTEM MITTELS ZWEIER ENERGIE-SPEKTREN
ENSEMBLE DE DETECTEURS PLACES COTE A COTE POUR SYSTEME D'IMAGERIE AUX RAYONS X A DEUX NIVEAUX D'ENERGIE

(30) Priority: 06.08.1997 US 907271
(43) Date of publication of application: 21.06.2000
(73) Proprietor: L-3 Communications Security and Detection Systems Corporation California, Long Beach, CA 90810 (US)
(72) Inventor: GERLACH, Richard, K., Rolling Hills Estates, CA 90274 (US); BJORKHOLM, Paul, J., Newport Beach, CA 92660 (US); ZAYEK, Francois, Santa Ana, CA 92705 (US)
(74) Representative: Jones, Graham H.
(86) International application number: PCT/US1998/015663
(87) International publication number: WO 1999/008132

(56) References cited:
- EP-A- 0 600 673
- GB-A- 2 287 164
- US-A- 4 731 807

## Description

### BACKGROUND OF THE INVENTION

### 1. Field of the Invention

The present invention relates to the field of x-ray imaging systems. In particular, the invention relates to the use of side-by-side detector arrays in a dual energy x-ray imaging system.

### 2. Description of Related Art

Applications for x-ray imaging systems are numerous, ranging from medical imaging to security inspection systems. Imaging systems of thy this type are described for example in GB-A-2287164, US-A-4731807, and EP-A-0600673.

One example of an x-ray imaging system for security is the luggage inspection system installed in airports. In this system, the object to be inspected (the passengers' luggage) is passed through a tunnel on a rolling conveyor belt between an x-ray source and sensors or detectors. As the object moves through the tunnel, the xrays go through the object. Depending on the material of the object, the energy contained in the x-ray beams are absorbed differently. The attenuation of the energy or the absorption characteristic of the object is received by the x-ray sensor as the object moves through the tunnel. In a scanning imaging system, the x-ray sensor typically consists of a linear array of photodiodes arranged in certain geometrical configuration. The intensity representative of the absorption characteristics of the object is scanned on a line by line basis. The entire image of the object is then constructed based on these intensity scan lines.

To differentiate different materials in the object, multiple energy levels are used. Since different materials absorb x-ray energy differently, the use of multiple-energy x-rays provides a profile of the different materials constituting the object under examination. For most practical purposes, two energy levels, a low energy and a high energy levels, covering the x-ray response spectrum are sufficient in characterizing the intensity profile of the materials. Systems utilizing two energy levels are referred to as dual energy x-ray systems.

In a prior art dual energy x-ray system, there are two corresponding detector arrays. One detector array responds to low energy x-ray radiation (referred to as the low energy detector) and one detector array responds to high energy x-ray radiation (referred to as the high energy detector). The two arrays are arranged such that the low energy detector is directly on top of the high energy detector separated by an appropriate filter. An x-ray beam passes through the object under examination and strikes individual elements in the low energy detector and the corresponding individual elements in the high energy detector. The individual elements in the low energy detector absorbs the low energy x-ray photons emerging for the object and transmits most of the high energy x-ray photons to the corresponding individual elements in the high energy detector. In this prior art system, the corresponding elements in the two detector arrays are aligned such that the x-ray goes through both the low energy element and the high energy element.

There are several disadvantages with the prior art technique. First, it is difficult to provide independent control for the high energy detector array because anything done on the low energy detector array will have a direct influence on the high energy detector array. Second, the low energy detector also attenuates high energy photons thereby limiting the selectivity and discriminating power. Third, alignment of the two detectors limits the choice of optimal filtering material. Fourth, aligning two separate arrays causes mechanical difficulties.

As stated above, applications for x-ray imaging systems are numerous. For example, Great Britain Patent Application No. 2,287,164 is directed to scanning luggage using x ray generators operating at different energies; U.S. Patent No. 4,731,807 is directed to x-ray examination apparatus; and European Patent Application 0 600 673 is directed to a method and apparatus for imaging radiation beams of different wavelengths. However, none of these references disclose the use of side-by-side detector arrays in a dual energy x-ray imaging system.

Accordingly, there is a need in the dual-energy x-ray imaging technology to provide independent control for the detector arrays and at the same time giving these detectors a high selectivity and discriminating power with flexible choice of optimal filtering material and stable mechanical assembly.

### SUMMARY OF THE INVENTION

The present invention discloses a radiation detector. The radiation detector comprises a first element, a second element, and a filter. The first element is responsive to radiation of a first energy range. The second element is responsive to radiation of a second energy range. The second element is positioned to receive radiation independently of the first element. The first element and the second element are placed side-by-side. The filter is coupled to the second element to enhance a radiation response from the second element.

### BRIEF DESCRIPTION OF THE DRAWINGS

The features and advantages of the present invention will become apparent from the following detailed description of the present invention in which:
Figure 1 is an illustration of one embodiment of a system utilizing the teaching of the present invention.
Figure 2(A) is an illustrative cross-sectional view of one embodiment of the present invention.
Figure 2(B) is an illustrative top view of one embodiment of the present invention.
Figure 3 is an illustrative cross-sectional view of another embodiment of the present invention.
Figure 4(A) is an illustrative cross-sectional view of one embodiment of an assembly board incorporating the dual energy detector arrays.
Figure 4(B) is an illustrative perspective view of one embodiment of an assembly board incorporating the dual energy detector arrays.
Figure 5 is a diagram illustrating the geometry of the arrangement of the assembly boards with respect to the x-ray beams.
Figure 6 is a diagram illustrating the geometry of the arrangement of the assembly boards in the tunnel used in an inspection system.
Figure 7 is a block diagram illustrating the data processing system.
Figure 8 is a timing diagram illustrating the association of the low and high energy information.

### DESCRIPTION OF THE PRESENT INVENTION

The present invention discloses a dual energy x-ray imaging system utilizing side-by-side detector arrays. Two detectors responsive to the low energy and high energy radiation are placed side by side. Each detector absorbs the radiation independently of the other. The side-by-side detector arrays provide low cross talk and high sensitivity with simple mechanical structure.

In the following description, for purposes of explanation, numerous details are set forth in order to provide a thorough understanding of the present invention. However, it will be apparent to one skilled in the art that these specific details are not required in order to practice the present invention. In other instances, well known electrical structures and circuits are shown in block diagram form in order not to obscure the present invention unnecessarily.

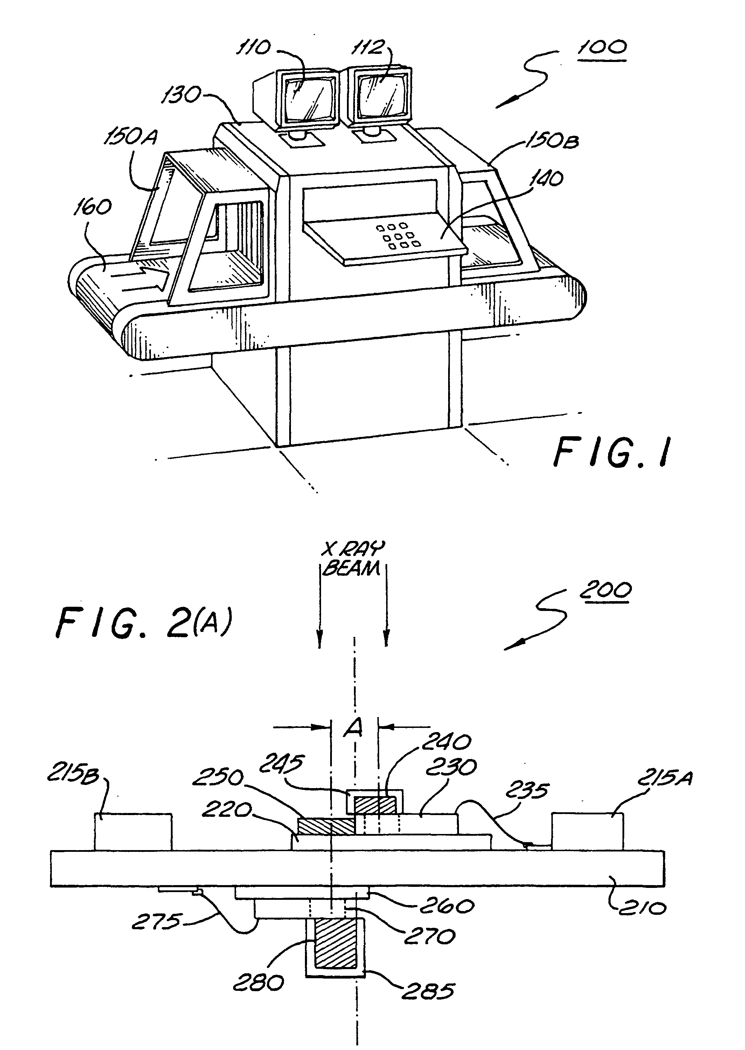

Referring to Figure 1, an illustration of one embodiment of an x-ray imaging inspection system 100 utilizing the teaching of the present invention is shown. System 100 consists of two display monitors 110 and 112, a main housing 130, a control console 140, tunnel guides 150A and 150B and a conveyor belt structure 160.

Display monitors 110 and 112 display the two dimensional image of the object going through the tunnel. Display monitor 110 shows the image in pseudocolor while display monitor 112 shows the image in gray level. Main housing 130 houses the detector arrays (not shown) and x-ray assembly (not shown).

Control console 140 provides data entry interface to the user such as keyboard and mouse. Through control console 140, the user can select desired operations. Typical operations include system turn-on, activate and stop the power roller, freeze frame and select image manipulations (e.g. zoom, edge tracing). Tunnel guides 150A and 150B provide mechanical guides at the entrance and exit of the tunnel. Conveyor belt structure 160 provides bi-directional rolling action to move the object through the tunnel.

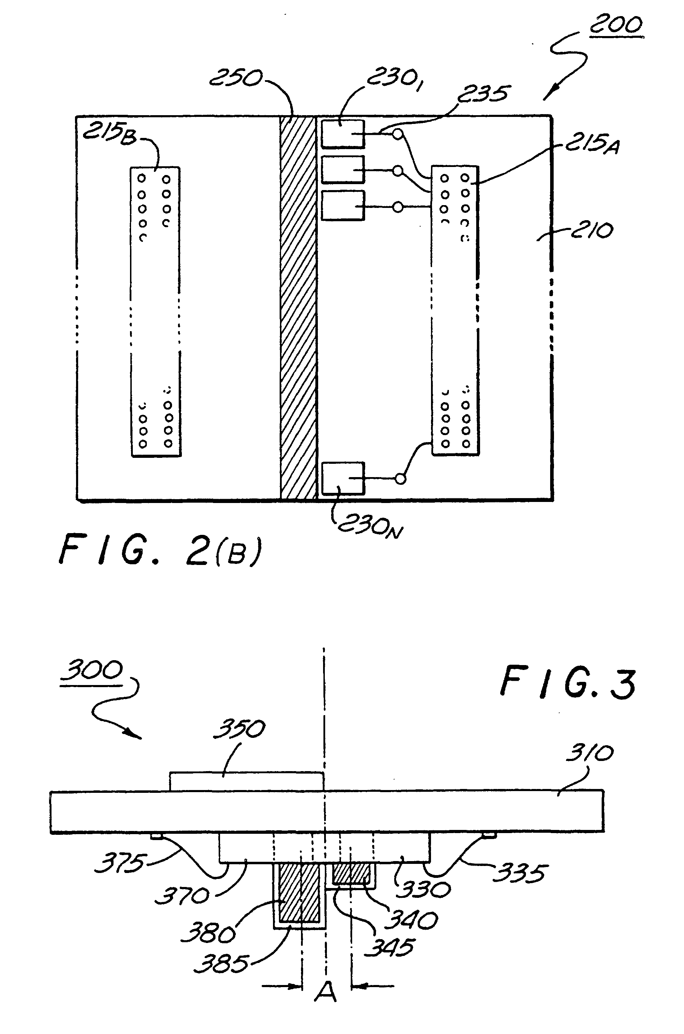

Referring to Figure 2(A), an illustrative cross-sectional view of one embodiment of the side-by-side detector subassembly 200 is shown. In this illustration, the x-ray beam is shown to radiate from the top down.

Detector Subassembly 200 consists of a printed circuit board 210, two interface connectors 215A and 215B, low energy ground plane 220, low energy photodetectors array 230, low energy bonding wire 235, low energy crystal 240, low energy coating 245, filter 250, high energy ground plane 260, high energy photo detector array 270, high energy bonding wire 275, high energy crystal 280, and high energy coating 285.

Printed circuit board 210 holds the two detector arrays 230 and 270 and provides the signal lines to the data processing board via two interface connectors 215A and 215B. Interface connectors 215A and 215B provide mechanical coupling to the data processing board for the signal lines from the low energy and high energy photodiodes, respectively.

Low energy ground plan 220 provides the common ground connection for the common cathode photodiode array 230. In one embodiment, the material for ground plane is gold plated copper. Low energy photodetector array 230 consists of an array of photodiodes. Each photodiode responds to the low energy radiation and converts the brightness of the light representing the intensity profile of the material corresponding to low energy radiation into an analog signal. The analog signal from each photodiode is then connected to the data processing board via interface connector 215A. The number of photodiodes, the spacing distance, and their dimensions represent the resolution of the image in the corresponding scan line. In one embodiment, the number of photodiodes (and their associated crystal elements) is 32. In this embodiment each photodiode has a rectangular shape with dimensions .137 cm (0.054") and .157 cm (0.062"). The separation between adjacent elements is about .02 cm (0.008") such that the center-to-center distance between adjacent elements is .157 cm (0.062").

Low energy bonding wire 235 connects the output of the photodiode array to the appropriate signal terminals which are routed to low energy interface connector to 215A. Low energy crystal array 240 are of scintillating type. Low energy crystal array 240 helps to reduce the effects of light scatter within the detector array and converts the x-ray photons into visible light photon which can be readily sensed by the photodiodes. Low energy crystal array 240 is designed to operate with low energy radiation. Low energy crystal array 240 consists of an array of crystal elements physically and optically matched to the photodiode elements in the photodiode array 230. Low energy coating 245 serves to hold the crystal elements together and to create optical block for reducing optical cross-talk. Another important function of coating 245 is to provide optical reflection for returning light. A typical material for coating 245 is white epoxy.

Filter 250 provides filtering effects by enhancing the capability of the detector array to respond to the high energy radiation. Filter 250 is usually made of material having a high atomic number. In one embodiment, the material for filter 250 is silver.

Other materials (or their combinations) such as gold and copper can also be used. High energy ground plane 260 provides the common ground connection for the common cathode photodiode array 270. In one embodiment, the material for ground plane is gold plated copper. Photodetector array 270 consists of an array of photodiodes. Each photodiode responds to the high energy x-ray radiation and converts the brightness of the light representing the intensity profile of the material corresponding to high energy radiation into an analog signal. The analog signal from each photodiode is then connected to the data processing board via interface connector 215B. The number of photodiodes, the spacing distance, and their dimensions represent the resolution of the image in the corresponding scan line. In one embodiment, the high energy photodiode array 270 is identical to the low energy photodiode array 230.

High energy bonding wire 275 connects the output of the photodiode array to the appropriate signal terminals which are routed to high energy interface connector to 215B . Crystal array 280 performs similar functions to those of crystal array 240 except that crystal array is matched to operate with high energy radiation. Crystal array 280 consists of an array of crystal elements physically and optically matched to the photodiode in the photodiode array 270 elements. Coating 285 serves to hold the crystal elements together and to create optical block for reducing optical cross-talk.

In the embodiment shown in Figure 2(A), elements of the high energy group are attached to the other side of printed circuit board 210. The positioning of the high energy elements is such that the two detector arrays are placed side-by-side (either on the same side or opposite side of printed circuit board 210). As will be explained later, this positioning of the two detector arrays provide performance superior to the prior art.

There are two important distance parameters in the detector assembly 200: (1) the center-to-center distance, and (2) the edge-to-edge distance between the low energy crystal array 240 and the high energy crystal array 280. These two distances represent the optical resolving power between the low energy sensitive elements and the high energy sensitive elements of the detector arrays. In one embodiment, both the low energy and high energy detector arrays respond to the same x-ray pulse. To reduce radiation effects, the x-ray pulse should be as narrow as possible. Therefore, it is desirable (but not necessary) that the center-to-center distance to be as short as possible without overlapping the low energy and the high energy detector arrays. Accordingly, the center-to-center distance A between the two detector arrays is approximately .157 cm (0.062") which also corresponds to the center-to-center distance between the adjacent photodiode elements in each detector array. In addition, the edge-to-edge distance between the two detector arrays is ideally zero. In one embodiment, the tolerance of the edge-to-edge distance is ± .005 cm (0.002").

Referring to Figure 2(B), an illustration of the top view of detector assembly 200 in Figure 2(A) in shown. As seen from the top, only the low energy elements are visible. The low energy photodiode array 230 consists of N photodiode elements 230, to 230. The filter 250 is shown exposed as seen from the top.

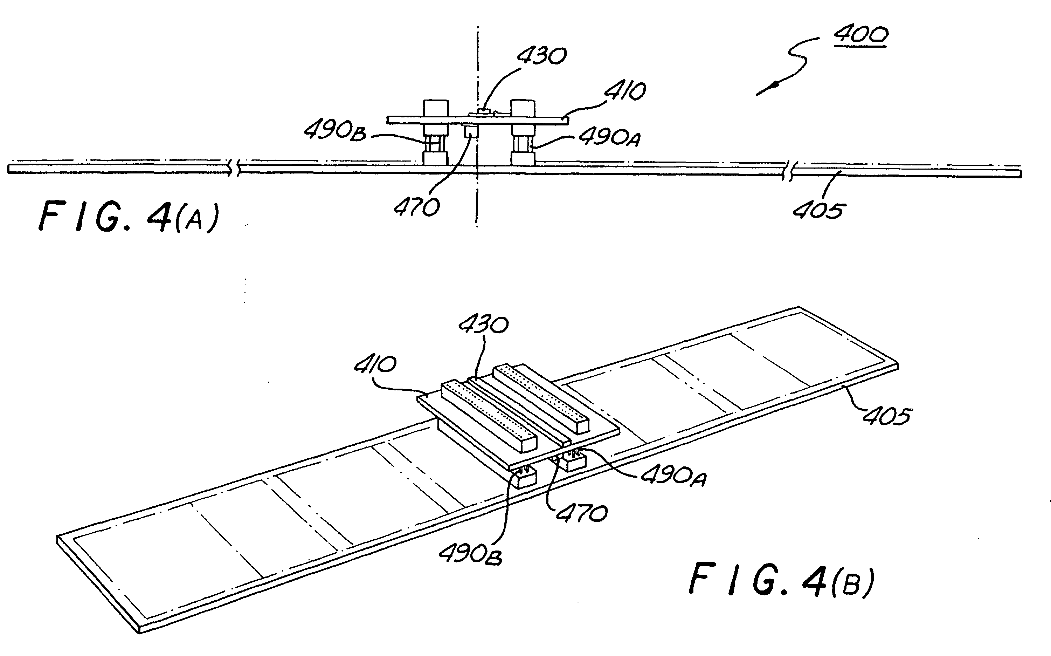

Referring to Figure 3, an illustration of a cross-sectional view of another embodiment of the detector assembly 300 is shown. In this embodiment, both the low energy and the high energy arrays are located on the same side of the printed circuit board.

Detector assembly 300 consists of printed circuit board 310, to interface connectors 315A and 315B, low energy array 330, low energy bonding wire 335, low energy crystal 340, filter 350, high energy photodiode array 370, high energy bonding wire 375, high energy crystal 380, coating 385. The elements are essentially the same as those described in connection with Figure 2(A).

In another embodiment (not shown), filter 350 may be embedded inside printed circuit board 310. the insertion of filter 350 can take place in the manufacturing of the printed circuit board. The embodiment would provide economic and performance advantages because it saves assembly costs and the filter is not susceptible to environmental conditions.

The positioning of the low energy detector array and the high energy detector array is such that each detector array receives the x-ray radiation independently of the other. This can be easily achieved by placing the two detector arrays side by side, either on the same side or on the opposite sides of a board. This arrangement allows independent control of each detector array. For example, filtering material can be selected for one detector array without causing interference or influence to the other. By receiving radiation directly, separately and independently, the two detector arrays can provide better selectivity for the two energy radiations.

Referring to Figure 4(A), an illustration of a cross-sectional view of one embodiment of the complete detector board 400 is shown. Detector board 400 consists of printed circuit board 405, detector assembly board 410, low energy detector array 430, high energy detector array 470, and interface connectors 490A and 490B.

Printed Circuit Board 405 is populated with analog and digital circuitry for signal conditioning, filtering, and multiplexing the analog voltages corresponding to the intensity levels of the sensing photodiode elements. In one embodiment, the analog voltage is digitized into a 12-bit digital data. The digital data representing the intensity level of the photodiode elements are processed by a data processing subsystem as will be described later.

Referring to Figure 4(B), an illustration of a perspective view of the embodiment in Figure 4(A) is shown.

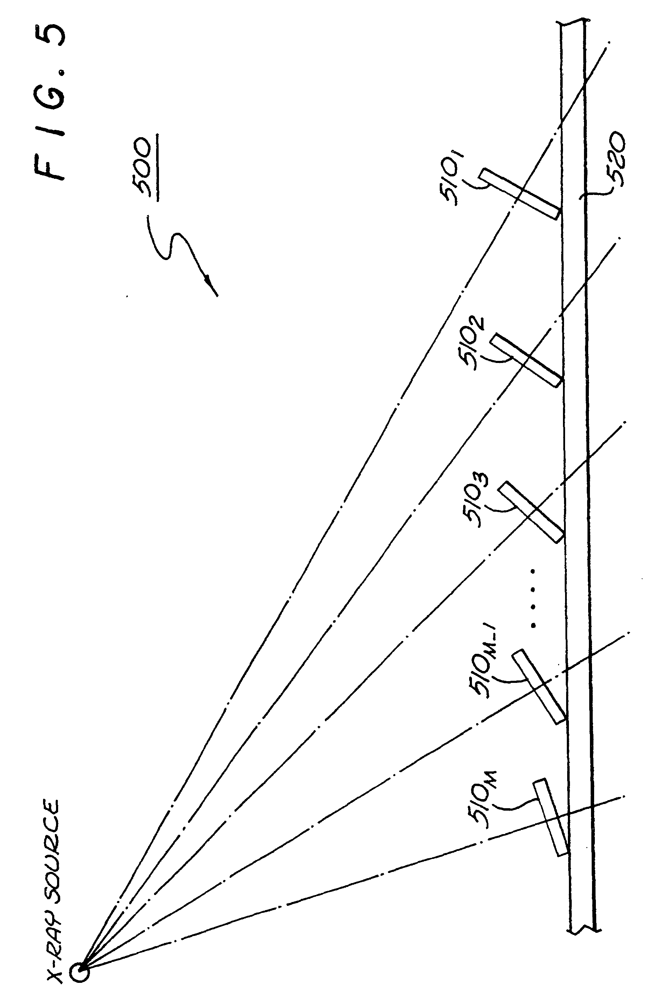

Referring to Figure 5, an illustration of one embodiment of the line array assembly 500 is shown. The line array assembly 500 consists of board holder 520 and M detector boards 510₁, through 510_{M}.

Board holder 520 provides mechanical support to hold a plurality of detector boards 510₁ through 510_{M}. Each of the detector boards 510₁ through 510_{M} is oriented such that the x-rays emitted from the x-ray source are perpendicular to the detector arrays located on each detector board. This arrangement provides the optimal sensitivity and maintains consistency in the optical response of the photodiode arrays.

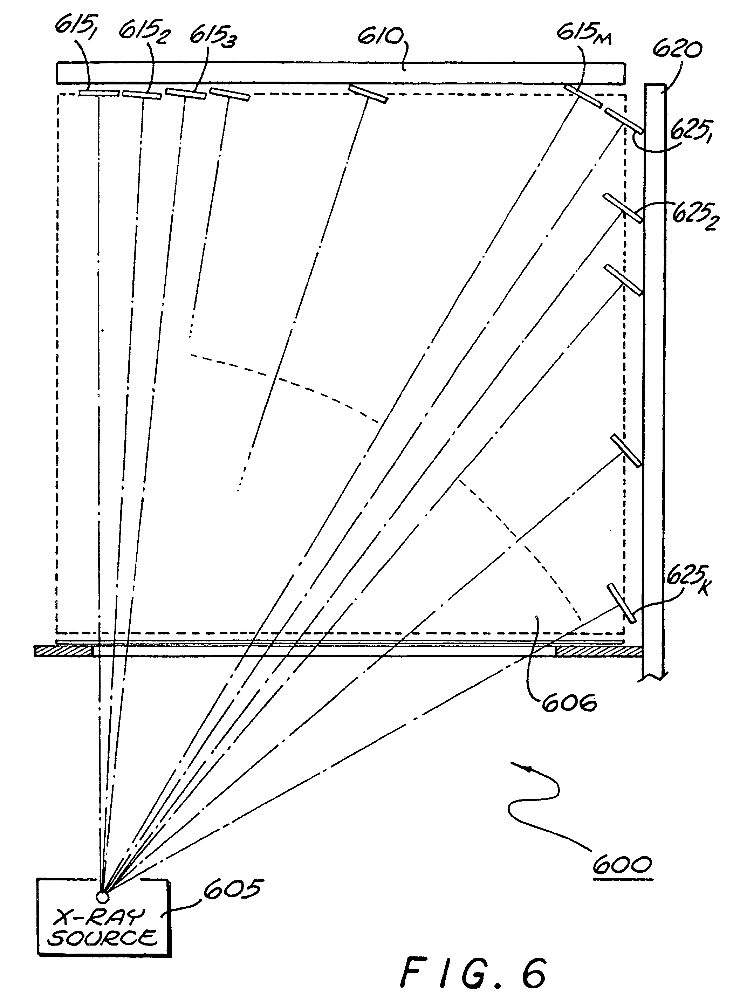

Referring to Figure 6, an illustrative cross-sectional view of the tunnel housing 600 is shown. Tunnel housing 600 consists of an x-ray source 605, active scanning area 606, horizontal board holder 610, and vertical board holder 620, x-ray source 605 is located outside the active scanning area 650. The active scanning area 606 provides the space in which the object to be scanned is passed through. In one embodiment, the active scanning area 605 is approximately square with a dimension of 60.96 cm (24") on each side. The x-ray source 605 is located approximately 38.1 cm (15") from the bottom horizontal line of the active scanning area 606.

The horizontal board holder 610 and the vertical board holder 620 form an L-shaped configuration to effectively provide the full geometrical coverage of the entire object to be scanned. The horizontal board holder 610 holds K detector boards 615₁ through 625_{M} and 625₁ through 625ₖ. These boards are identical with the exception of the orientation with respect to the x-ray beams emitting from the x-ray source 605. Each of the detector boards 615₁ through 615_{M} and 625₁ through 625ₖ is positioned on the corresponding board holder such that the x-ray impinges on each board in a perpendicular direction.

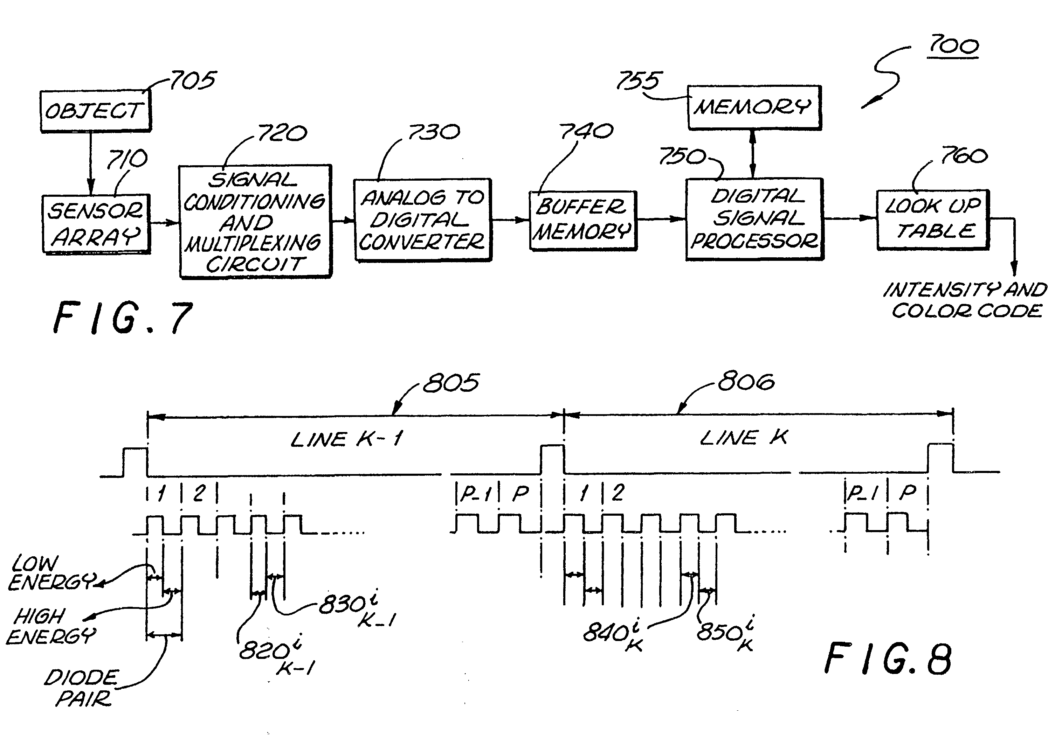

Referring to Figure 7, a block diagram illustrating one embodiment of the front end data processing system 700 is shown. Front end data processing system 700 scans object 705 and consists of sensor array 710, signal conditioning and multiplexing circuit 720, analog-to-digital converter 730, buffer memory 740, digital signal processor 750, local memory 755, and look-up cable 760.

The object 705 is moved through the tunnel and the scanning area. The x-ray source transmit x-ray pulses through the object 705 and the absorption characteristic is picked up by sensor array 710. Sensor array 710 includes the two detector arrays as described in connection with Figure 2A. The sensor array 710 provides analog quantity representing the optical response of the photodiodes. Each detector array corresponds to one scan line. By integrating a series of scan lines in synchronization with the movement of the object 705 through the scanning area in the tunnel, a two dimensional image of the entire object can be reconstructed.

Signal conditioning and multiplexing circuit 720 performs analog signal processing on the analog quantities as provided by the photodiodes. The signal conditioning includes analog amplifying and filtering. The objective is to eliminate unwanted noise, clean the analog signal. The analog voltages are then multiplexed to provide input to an analog-to-digital converter 730. The analog voltages from the detector arrays are sampled and digitized sequentially through a clocking scheme that goes through all the detector arrays in one scanning period and repeats the same process in the next scan line. The multiplexing can be performed in both directions.

Analog-to-digital converter 730 receives the analog voltage and digitizes into a 12-bit digital word. The digital data are fed into a buffer memory 740. The buffer memory 740 stores digitized words. In one embodiment, buffer memory 740 is a first-in first-out (FIFO) memory. The use of a FIFO offers a processing advantage in that while a word is being read out for processing, a new data can be written. Since new data are written over old data, a saving in memory size can be achieved.

Digital signal processor 750 reads out data from buffer memory 740 and performs pixel association which will be described later. Local memory 755 provides additional memory storage for digital signal processor 750. Local memory 755 may contain instructions or data to be used by digital signal processor 750. The result of pixel association is a word representing both the low energy and high energy responses. In one example, this word is a 16 bit data consisting of two bytes: one byte corresponds the low energy characteristic and one byte corresponds the high energy characteristic.

Look up table 760 converts the pixel-associated word into data representing the intensity and the coded color. These values are determined based on the particular configuration of the detector array and the x-ray assembly. In one example, the intensity value is 11 bit and the pseudocolor code is 5-bit for a 16-bit word. The size of LUT 760 in this example is therefore 64KB x 16. The output of the LUT 760 goes to the Data Transfer Processor (DTP) for further processing.

Referring to the example of Figure 8, a timing waveform showing the pixel association is shown. Pixel association is a process in which the high energy response at one clock time is associated to the low energy response at another clock time to provide a better resolution to the image.

Two consecutive clock time periods k and k-1 are shown in Figure 8. Clock time periods 805 and 806 correspond to line k-1 and k, respectively. Each line corresponds to one scan line. Within each clock time period, there are P clocks corresponding to P readings from the low energy and the high energy photodiodes.

The time intervals 820ⁱₖ₋₁ and 830ⁱₖ₋₁ correspond to the low energy and high energy readings of pixel i of line k-1. The time intervals 840ⁱₖ and 850ⁱₖ correspond to the low-energy and high energy readings of pixel i of line k. In one example, pixel association is performed by associating one line with the next line. The result of the pixel association is the pairing of the low energy and high energy readings to be sent to the Data Transfer Processor for further analysis.

Let lⁱₖ₋₁, hⁱₖ₋₁, lⁱₖ, and hⁱₖ, be the low-energy and high energy readings of pixel i of line k-1 and K. Pixel association is performed so that the pair (lⁱₖ₋₁, hⁱₖ) is combined. There is a special case for the first line in each frame. The association is performed on a line by line basis in real time by reading out the stored values in the previous line while writing the new values of the current line. There are many ways to do this. In one example, a first in first out (FIFO) buffer memory is used to store the readings. As new values (values corresponding to line k) and provided of the digital signal processor are written into the FIFO, old values (values corresponding to line k-1) are read out by the digital signal processor.

While this invention has been described with reference to illustrative embodiments, this description is not intended to be construed in a limiting sense.

## Claims

1. A radiation detector comprising:
a first element (240) responsive to radiation of a first energy range to provide a first radiation response;
a second element (280) responsive to radiation of a second energy range to provide a second radiation response, the second element being positioned to receive radiation independently of the first element, the first element and the second element placed side by side;
a filter (250) coupled to the second element to enhance the second radiation response independently of the first radiation response.

2. The radiation detector of claim 1, wherein said filter (250) includes silver, gold or copper.

3. The radiation detector of claim 1, wherein the second energy range is higher than the first energy range.

4. The radiation detector of claim 1, wherein each said element comprises:
a crystal configured to operate within each said energy range; and
a sensor coupled to the crystal to provide an indication of the corresponding radiation response.

5. The radiation detector of claim 4, wherein each element further comprises:
a coating (245,285) coupled to the crystal to provide optical enhancement.

6. The radiation detector of claim 4 wherein the indication is an analog quantity.

7. The radiation detector of claim 4, wherein the sensor is a photodiode.

8. The radiation detector of claim 4, wherein the crystal is of a scintillating type.

9. A system comprising:
an x-ray source for emitting xrays; and
a radiation detector positioned to receive the xrays from said source, said radiation detector comprising:
a first element (240) responsive to radiation of a first energy range to provide a first radiation response,
a second element (280) responsive to radiation of a second energy range to provide a second radiation response, the second element being positioned to receive radiation independently of the first element, the first element and the second element placed side by side;
a filter (250) coupled to the second element to enhance the second radiation response independently of the first radiation response.

10. The system of claim 9, wherein said filter (250) includes silver, gold or copper.

11. The system of claim 9, wherein the second energy range is higher than the first energy range.

12. The system detector of claim 9, wherein each said element comprises:
a crystal configured to operate within each said energy range; and
a sensor coupled to the crystal to provide an indication of radiation response.

13. The system of claim 12, wherein each element further comprises:
a coating (245,285) coupled to the crystal to provide optical enhancement.

14. The system of claim 12, wherein the indication is an analog quantity.

15. The system of claim 12, wherein the sensor is a photodiode.

16. The system of claim 12, wherein the crystal is of a scintillating type.

17. A method for providing an image representative of internal structure of an object, the method comprising:
emitting xrays through said object, the xrays including a first radiation and a second radiation;
generating a first radiation response and a second radiation response separately by passing independently said radiation through a first element (240) responsive to the first radiation and a second (280) element responsive to the second radiation; the first element and the second element being placed side-by-side;
filtering the radiation by providing a filter capted to the second element to enhance the second radiation response independently of the first radiation response;
generating an indication representative of said first and second radiation responses; and
processing said indication to produce said image.

18. The method of claim 17 wherein said step of detecting includes a step of positioning said elements such that the second element receives radiation independently of the first element.

## Patentansprüche

1. Strahlungsdetektor mit:
einem ersten Element (240), das auf die Strahlung eines ersten Energiebereichs anspricht, um eine erste Strahlungsempfindlichkeit bereitzustellen;
einem zweiten Element (280), das auf die Strahlung eines zweiten Energiebereichs anspricht, um eine zweite Strahlungsempfindlichkeit bereitzustellen, wobei das zweite Element so positioniert ist, dass es Strahlung unabhängig vom ersten Element empfängt, und das erste und zweite Element nebeneinander platziert sind;
einem mit dem zweiten Element gekoppelten Filter (250), um die zweite Strahlungsempfindlichkeit unabhängig von der ersten Strahlungsempfindlichkeit zu verstärken.

2. Strahlungsdetektor nach Anspruch 1, bei dem das Filter (250) Silber, Gold oder Kupfer enthält.

3. Strahlungsdetektor nach Anspruch 1, bei dem der zweite Energiebereich höher ist als der erste Energiebereich.

4. Strahlungsdetektor nach Anspruch 1, bei dem jedes dieser Elemente aufweist:
einen Kristall, der so konfiguriert ist, dass er innerhalb jedes dieser Energiebereiche aktiv ist; und
einen mit dem Kristall gekoppelten Sensor, um eine Anzeige der entsprechenden Strahlungsempfindlichkeit bereitzustellen.

5. Strahlungsdetektor nach Anspruch 4, bei dem jedes dieser Elemente ferner aufweist:
eine mit dem Kristall gekoppelte Beschichtung (245, 285), um eine optische Verstärkung bereitzustellen.

6. Strahlungsdetektor nach Anspruch 4, bei dem die Anzeige eine analoge Größe ist.

7. Strahlungsdetektor nach Anspruch 4, bei dem der Sensor eine Fotodiode ist.

8. Strahlungsdetektor nach Anspruch 4, bei dem der Kristall vom Scintillatortyp ist.

9. System mit:
einer Röntgenstrahlquelle zum Emittieren von Röntgenstrahlen; und
einem Strahlungsdetektor, der so positioniert ist, dass er die Strahlen aus dieser Quelle empfängt, wobei der Strahlungsdetektor aufweist:
ein erstes Element (240), das auf die Strahlung eines ersten Energiebereichs anspricht, um eine erste Strahlungsempfindlichkeit bereitzustellen;
ein zweites Element (280), das auf die Strahlung eines zweiten Energiebereichs anspricht, um eine zweite Strahlungsempfindlichkeit bereitzustellen, wobei das zweite Element so positioniert ist, dass es Strahlung unabhängig vom ersten Element empfängt, und das erste und zweite Element nebeneinander platziert sind;
ein mit dem zweiten Element gekoppeltes Filter (250), um die zweite Strahlungsempfindlichkeit unabhängig von der ersten Strahlungsempfindlichkeit zu verstärken.

10. System nach Anspruch 9, bei dem das Filter (250) Silber, Gold oder Kupfer enthält.

11. System nach Anspruch 9, bei dem der zweite Energiebereich höher ist als der erste Energiebereich.

12. System nach Anspruch 9, bei dem jedes dieser Elemente aufweist:
einen Kristall, der so konfiguriert ist, dass er innerhalb jedes dieser Energiebereiche aktiv ist; und
einen mit dem Kristall gekoppelten Sensor, um eine Anzeige der entsprechenden Strahlungsempfindlichkeit bereitzustellen.

13. System nach Anspruch 12, bei dem jedes Element ferner aufweist:
eine mit dem Kristall gekoppelte Beschichtung (245, 285), um eine optische Verstärkung bereitzustellen.

14. System nach Anspruch 12, bei dem die Anzeige eine analoge Größe ist.

15. System nach Anspruch 12, bei dem der Sensor eine Fotodiode ist.

16. System nach Anspruch 12, bei dem der Kristall vom Scintillatortyp ist.

17. Verfahren zur Bereitstellung eines Bildes, das die innere Struktur eines Objektes repräsentiert, wobei das Verfahren aufweist:
Emittieren von Röntgenstrahlen durch das Objekt, wobei die Röntgenstrahlen eine erste und eine zweite Strahlung enthalten;
getrenntes Erzeugen einer ersten und einer zweiten Strahlungsempfindlichkeit, indem die Strahlung unabhängig durch ein erstes Element (240), das auf die erste Strahlung anspricht, und ein zweites Element (280), das auf die zweite Strahlung anspricht, geleitet wird, wobei das erste und zweite Element nebeneinander platziert sind;
Filtern der Strahlung durch Bereitstellen eines mit dem zweiten Element gekoppelten Filters, um die zweite Strahlungsempfindlichkeit unabhängig von der ersten Strahlungsempfindlichkeit zu verstärken;
Erzeugen einer Anzeige, die für die erste und zweite Strahlungsempfindlichkeit repräsentativ ist; und
Verarbeiten der Anzeige, um das Bild zu erzeugen.

18. Verfahren nach Anspruch 17, bei dem der Detektionsschritt einen Schritt der Positionierung der Elemente in der Weise enthält, dass das zweite Element Strahlung unabhängig vom ersten Element empfängt.

## Revendications

1. Détecteur de rayonnement comprenant :
un premier élément (240) sensible au rayonnement d'une première plage d'énergie pour fournir une première réponse de rayonnement;
un second élément (280) sensible au rayonnement d'une seconde plage d'énergie pour fournir une seconde réponse de rayonnement, le second élément étant positionné de manière à recevoir un rayonnement indépendamment du premier élément, le premier élément et le second élément étant placés côte à côte;
un filtre (250) couplé au second élément pour augmenter la seconde réponse de rayonnement indépendamment de la première réponse de rayonnement.

2. Détecteur de rayonnement selon la revendication 1, dans lequel ledit filtre (250) comprend de l'argent, de l'or ou du cuivre.

3. Détecteur de rayonnement selon la revendication 1, dans,lequel la seconde plage d'énergie est supérieure à la première plage d'énergie.

4. Détecteur de rayonnement selon la revendication 1, dans lequel chacun desdits éléments comprend :
un cristal configuré pour opérer dans chacune desdites plages d'énergie; et
un capteur couplé au cristal pour fournir une indication de la réponse de rayonnement correspondante.

5. Détecteur de rayonnement selon la revendication 4, dans lequel chaque élément comprend en outre :
un revêtement (245, 285) couplé au cristal pour fournir une amélioration optique.

6. Détecteur de rayonnement selon la revendication 4, dans lequel l'indication est une quantité analogique.

7. Détecteur de rayonnement selon la revendication 4, dans lequel le capteur est une photodiode.

8. Détecteur de rayonnement selon la revendication 4, dans lequel le cristal est du type à scintillation.

9. Système comprenant :
une source de rayons X pour émettre des rayons X; et
un détecteur de rayonnement positionné de manière à recevoir les rayons X de ladite source, ledit détecteur de rayonnement comprenant :
un premier élément(240) sensible au rayonnement d'une première plage d'énergie pour fournir une première réponse de rayonnement;
un second élément (280) sensible au rayonnement d'une seconde plage d'énergie pour fournir une seconde réponse de rayonnement, le second élément étant positionné de manière à recevoir un rayonnement indépendamment du premier élément, le premier élément et le second élément étant placés côte à côte; et
un filtre (250) couplé au second élément pour augmenter la seconde réponse de rayonnement indépendamment de la première réponse de rayonnement.

10. Système selon la revendication 9, dans lequel ledit filtre (250) comprend de l'argent, de l'or ou du cuivre.

11. Système selon la revendication 9, dans lequel la seconde plage d'énergie est supérieure à la première plage d'énergie.

12. Détecteur de système selon la revendication 9, dans lequel chacun desdits éléments comprend :
un cristal configuré pour opérer dans chacune desdites plages d'énergie; et
un capteur couplé au cristal pour fournir une indication de la réponse de rayonnement.

13. Système selon la revendication 12, dans lequel chaque élément comprend en outre :
un revêtement (245, 285) couplé au cristal pour fournir une amélioration optique.

14. Système selon la revendication 12, dans lequel l'indication est une quantité analogique.

15. Système selon la revendication 12, dans lequel le capteur est une photodiode.

16. Système selon la revendication 12, dans lequel le cristal est du type à scintillation.

17. Procédé pour fournir une image représentative de la structure interne d'un objet, le procédé comprenant :
l'émission de rayons X à travers ledit objet, les rayons X comprenant un premier rayonnement et un second rayonnement;
la génération d'une première réponse de rayonnement et d'une seconde réponse de rayonnement en faisant passer séparément et indépendamment ledit rayonnement à travers un premier élément (240) sensible au premier rayonnement et un second élément (280) sensible au second rayonnement; le premier élément et le second élément étant placés côte à côte;
le filtrage du rayonnement en mettant en oeuvre un filtre couplé au second élément pour améliorer la seconde réponse de rayonnement indépendamment de la première réponse de rayonnement;
la génération d'une indication représentative desdites première et seconde réponses de rayonnement; et
le traitement de ladite indication pour produire ladite image.

18. Procédé selon la revendication 17, dans lequel ladite étape de détection comprend une étape de positionnement desdits éléments de sorte que le second élément reçoive un rayonnement indépendamment du premier élément.
